(19) Europäisches Patentamt
European Patent Office
Office européen des brevets

(11) **EP 3 823 208 B1**

(12) **EUROPEAN PATENT SPECIFICATION**

(45) Date of publication and mention
of the grant of the patent:
**04.10.2023 Bulletin 2023/40**

(21) Application number: **19833875.8**

(22) Date of filing: **02.07.2019**

(51) International Patent Classification (IPC):
**H04B 10/70** (2013.01)      **H04L 9/08** (2006.01)

(52) Cooperative Patent Classification (CPC):
**H04L 9/0858; H04B 10/70**

(86) International application number:
**PCT/CN2019/094291**

(87) International publication number:
**WO 2020/011051 (16.01.2020 Gazette 2020/03)**

(54) **SAGNAC INTERFEROMETER-BASED TIME PHASE CODING DEVICE AND QUANTUM KEY DISTRIBUTION SYSTEM**

AUF SAGNAC-INTERFEROMETER BASIERENDE ZEITPHASENCODIERVORRICHTUNG UND QUANTENSCHLÜSSELVERTEILUNGSSYSTEM

DISPOSITIF DE CODAGE DE PHASE TEMPORELLE BASÉ SUR UN INTERFÉROMÈTRE DE SAGNAC, ET SYSTÈME DE DISTRIBUTION DE CLÉ QUANTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.07.2018 CN 201810749227**

(43) Date of publication of application:
**19.05.2021 Bulletin 2021/20**

(73) Proprietor: **Quantumctek Co., Ltd.**
**Hefei, Anhui 230088 (CN)**

(72) Inventors:
• **TANG, Yanlin**
**230088 Hefei, Anhui (CN)**
• **DONG, Jing**
**230088 Hefei, Anhui (CN)**

(74) Representative: **Detken, Andreas**
**Isler & Pedrazzini AG**
**Giesshübelstrasse 45**
**Postfach 1772**
**8027 Zürich (CH)**

(56) References cited:
**CN-A- 107 979 463      CN-A- 108 667 519**
**CN-U- 206 865 468      CN-U- 208 754 311**
**US-A1- 2011 280 405**

• **ZHOU CHUNYUAN ET AL: "Time-division single-photon Sagnac interferometer for quantum key distribution", APPLIED PHYSICS LETTERS, AMERICAN INSTITUTE OF PHYSICS, 2 HUNTINGTON QUADRANGLE, MELVILLE, NY 11747, vol. 82, no. 5, 3 February 2003 (2003-02-03), pages 832-834, XP012034726, ISSN: 0003-6951, DOI: 10.1063/1.1541102**

**EP 3 823 208 B1**

**Description**

The present application claims the priority to Chinese Patent Application No.201810749227.4, titled "APPARATUS FOR TIME-BIN PHASE ENCODING BASED ON SAGNAC INTERFEROMETER AND SYSTEM FOR QUANTUM KEY DISTRIBUTION", filed on July 10, 2018 with the China National Intellectual Property Agency.

**TECHNICAL FIELD**

The present disclosure relates to the field of quantum secure communications, and in particular, to an apparatus for stable time-bin phase encoding in quantum key distribution, which is based on a Sagnac interferometer, and a system for quantum key distribution.

**BACKGROUND**

Generally, a current system for quantum key distribution employs a scheme of polarization encoding or phase encoding in a BB84 protocol. A conventional system of phase encoding is preferable than that of polarization encoding when there is a drastic change in polarization, but may not operate well when applied to long-distance aerial optical cables. A scheme of time-bin phase encoding is capable to address all the above issues well. Complete polarization independence is achieved, and an insertion loss is greatly reduced at a receiving end, thereby improving a data rate and a data transmission distance, and achieving stability against disturbances in an external environment. In addition, the scheme of time-bin phase encoding can operate well when applied to long-distance aerial optical cables.

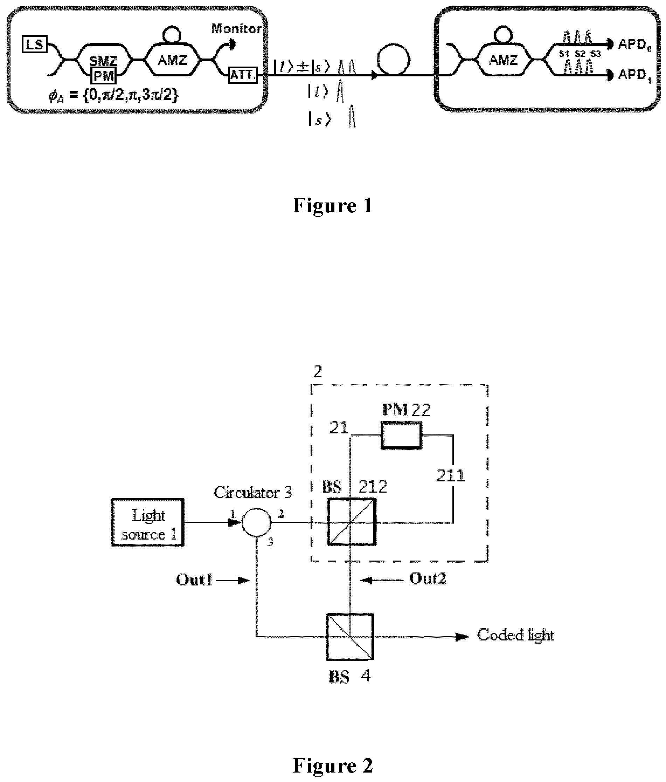

There are various schemes for time-bin phase encoding in conventional technology. Generally, an intensity modulator for time-bin encoding and a phase modulator for phase encoding are provided in a conventional structure for the time-bin phase encoding. It is necessary to arrange a lot of optical equipment in such structure, thereby imposing a strict requirement on structure design and control. In order to address such issue, a scheme for time-bin phase encoding has been provided based on a symmetric Mach-Zehnder (MZ) interferometer and an asymmetric Mach-Zehnder (MZ) interferometer, as shown in Figure 1. According to relevant description, the encoding structure as shown in Figure 1 requires less phase modulators, but it is still difficult to control stability of the structure. A good control on the stability can only be achieved when MZ interferometer is implemented based on the PLC (planar lightwave circuits) technology, which apparently limits application of the structure. Patent document No. CN206865468U proposes a self-stable system using a beam splitter and a loop containing a phase modulator. ZHOU CHUNYUAN et al. proposes using a Sagnac interferometer in document "Time-division single-photon Sagnac interferometer for quantum key distribution" (Applied Physics Letters, vol. 82, no. 5, 3 February 2003, pages 832-834).

Accuracy of the time-bin phase encoding is closely related to the stability of phase modulation performed by the phase modulator. The phase modulation (for example, a driving voltage actually supplied to the phase modulator, a half-wave voltage of the phase modulator, or a delay in the phase modulation) may deviate from a target value under different ambient temperatures. Hence, a degree of the phase modulation may vary with an external environment, and thus a requirement on quantum state encoding cannot be well fulfilled in quantum key distribution.

Therefore, it is necessary to provide an apparatus and a method for time-bin phase encoding, which are simple in structure, easy to control, highly efficient, and stable in operation.

**SUMMARY**

In view of the above problems in the conventional technology, an apparatus and a method for time-bin phase encoding based on a Sagnac interferometer are provided according to embodiments of the present disclosure. With an intensity modulator based on the Sagnac interferometer, a process of (4-state) time-bin phase encoding can be implemented without an additional phase modulator. The encoding apparatus is simple in structure, good in stability, and easy to control.

According to the present invention, an apparatus for time-bin phase encoding in quantum key distribution is provided. The apparatus includes a signal light source 1, an intensity modulator 2, a first optical transmission unit 3, and a beam combining unit 4. The signal light source 1 is configured to provide signal light. The intensity modulator 2 includes a Sagnac interferometer 21 and a first phase modulator 22. The Sagnac interferometer 21 includes a Sagnac loop 211 and a first beam splitting unit 212 arranged in the Sagnac loop 211. The first phase modulator 22 is arranged in the Sagnac loop 211. Thereby, the intensity modulator 2 is capable of receiving the signal light from the signal light source 1, splitting the signal light into two beams of coherent light travelling in the Sagnac loop in opposite directions, and finally generating and outputting a first beam of interference light and a second beam of interference light. The first beam of interference light is transmitted to a beam combining unit 4 via a first optical path, and the second beam of interference light is transmitted to the beam combining unit 4 via a second optical path. The beam combining unit 4 is configured to receive the first beam of interference light and the second beam of interference light, combine the first beam of interference light and the second beam of interference light into one beam, and output the one beam. The first optical transmission unit 3 is configured to transmit the signal light to the intensity modulator 2, and transmit the first beam of interference light outputted from the intensity modulator 2 to the beam combining unit 4 via the first optical path.

The first optical path and the second optical path are of different optical lengths for the first beam of interference light and the second beam of interference light, respectively.

In an embodiment, a splitting ratio of the first beam splitting unit is 1:1. The first beam splitting unit is a beam splitter in a preferable embodiment.

In an embodiment, a phase difference introduced between the two beams of coherent light by the first phase modulator 22 is 0, $\pi/2$, $\pi$, or $3\pi/2$, in a time period.

In an embodiment, the first optical transmission unit 3 may include a circulator.

In an embodiment, the apparatus for time-bin phase encoding may further include a phase-modulation calibrating apparatus 6. The phase-modulation calibrating apparatus 6 includes a phase detecting module 61 and a phase-calibration driving module 62. The phase detecting module 61 is configured to detect a difference between a target amount and a measured amount of phase modulation applied by the first phase modulator 22. The phase-calibration driving module 62 is configured to drive calibration on an amount of phase modulation applied by the first phase modulator 22. For example, a phase-modulation voltage or a delay with respect to a laser light is calibrated.

In an embodiment, the phase detecting module 61 may include a phase detecting unit 613 and a second optical transmission unit 611. The second optical transmission unit 611 is configured to transmit a part of the first beam of interference light to the phase detecting unit 613.

In an embodiment, the phase detecting module 61 may include a phase detecting unit 613, a second optical transmission unit 611, and a third optical transmission unit 612. The second optical transmission unit is configured to transmit a part of the first beam of interference light to the phase detecting unit 613, and the third optical transmission unit is configured to transmit a part of the second beam of interference light to the phase detecting unit 613.

In an embodiment, the first optical transmission unit 3 may be a circulator. In a preferable embodiment, the second optical transmission unit 611 may be a beam splitting unit and is arranged in the first optical path.

In an embodiment, the first optical transmission unit 3 may be a beam splitting unit. In a preferable embodiment, the second optical transmission unit 611 may be a circulator and is arranged out of the first optical path.

In an embodiment, the phase detecting unit 613 may include a first photoelectric cell 6131 and a phase detector 6133. The phase-modulation calibrating apparatus 6 may be configured to drive the first phase modulator 22 to perform phase modulation, record a maximum output Cnt_max and a minimum output Cnt_min of the first photoelectric cell, and perform one of following feedback processes: driving the first phase modulator 22

until an output from the first photoelectric cell is equal to Cnt_max, driving the first phase modulator 22 until an output from the first photoelectric cell is equal to Cnt_min, or driving the first phase modulator 22 until an output from the first photoelectric cell is equal to (Cnt_max-Cnt_min)/2.

In an embodiment, the phase detecting unit 613 may include a first photoelectric cell 6131, a second photoelectric cell 6132, and a phase detector 6133. The phase-modulation calibrating apparatus 6 may be configured to drive the first phase modulator 22 to perform phase modulation, record a maximum output Cnt1_max and a minimum output Cnt1_min of the first photoelectric cell, record the a maximum output Cnt2_max and a minimum output Cnt2_min of the second photoelectric cell, and perform one of following feedback processes: driving the first phase modulator 22 until an output from the first photoelectric cell is equal to Cnt1_max and/or an output from the second photoelectric cell is equal to Cnt2_min, or driving the first phase modulator 22 until an output from the first photoelectric cell is equal to Cnt1_min and/or an output from the second photoelectric cell is equal to Cnt2_max, or driving the first phase modulator 22 until a ratio of an output from the first photoelectric cell to an output from the second photoelectric cell is equal to (Cnt1_max - Cnt1_min)/(Cnt2_max - Cnt2_min).

In an embodiment, the phase detecting module 61 may further include a calibration light source and a second beam combining unit 614. The calibration light source is configured to provide calibration light. The second beam combining unit 614 is configured to combine the calibration light and the signal light into one beam for output. The apparatus for time-bin phase encoding may further include a second phase modulator 5. The second phase modulator 5 is arranged in the first optical path and/or in the second optical path, and is configured to introduce a modulation phase of 0 or $\pi/2$.

In another aspect of the present disclosure, a system for quantum key distribution is further provided. The system for quantum key distribution includes the aforementioned apparatus for time-bin phase encoding.

## BRIEF DESCRIPTION OF THE DRAWINGS

Figure 1 is a schematic structural diagram of a system for time-bin phase encoding according to conventional technology;

Figure 2 is a schematic structural diagram of an apparatus for time-bin phase encoding according to an embodiment of the present disclosure;

Figure 3 is a schematic diagram of a relationship between a modulated phase difference $\Delta\Phi$ and an encoded optical signal in an apparatus for time-bin phase encoding according to an embodiment of the present disclosure;

Figure 4 is a schematic structural diagram of an apparatus for time-bin phase encoding applied to a six-state quantum key distribution protocol according to an embodiment of the present disclosure;

Figure 5 is a schematic structural diagram of a phase-modulation calibrating apparatus according to an embodiment of the present disclosure;

Figure 6A shows a schematic structural diagram of a phase-modulation calibrating apparatus according to an embodiment of the present disclosure;

Figure 6B shows a schematic structural diagram of a phase-modulation calibrating apparatus according to another embodiment of the present disclosure;

Figure 7A shows a schematic structural diagram of a phase-modulation calibrating apparatus according to another embodiment of the present disclosure;

Figure 7B shows a schematic structural diagram of a phase-modulation calibrating apparatus according to another embodiment of the present disclosure;

Figure 8A shows a schematic structural diagram of a phase-modulation calibrating apparatus according to another embodiment of the present disclosure;

Figure 8B shows a schematic structural diagram of a phase-modulation calibrating apparatus according to another embodiment of the present disclosure;

Figure 9A shows a schematic structural diagram of a phase-modulation calibrating apparatus according to another embodiment of the present disclosure;

Figure 9B shows a schematic structural diagram of a phase-modulation calibrating apparatus according to another embodiment of the present disclosure;

Figure 10 is a schematic structural diagram of a phase detecting unit according to an embodiment of the present disclosure; and

Figure 11 is a schematic structural diagram of a phase detecting unit according to another embodiment of the present disclosure.

## DETAILED DESCRIPTION OF THE EMBODIMENTS

Hereinafter embodiments of the present disclosure are described in detail in conjunction with the drawings. The embodiments are provided as examples for fully conveying the scope of the present disclosure, as defined by the appended claims, to those skilled in the art. Therefore, the present disclosure is not limited to the embodiments disclosed herein.

Figure 2 is a schematic structural diagram of an apparatus for time-bin phase encoding according to an embodiment of the present disclosure, which is configured to explain a principle of the present disclosure. As shown in Figure 2, the apparatus for time-bin phase encoding includes a signal light source 1, an intensity modulator 2, a first optical transmission unit 3, and a beam combining unit 4.

The signal light source 1 may be a laser, such as a laser diode.

The intensity modulator 2 includes a Sagnac interferometer 21 and a first phase modulator 22. The Sagnac interferometer 21 includes a Sagnac loop 211 and a first beam splitting unit 212 arranged in the Sagnac loop. In a case that light outputted from the signal light source 1 enters the intensity modulator 2, the light is firstly split by the first beam splitting unit 212 into two beams of coherent light (that is, a first beam of coherent light and a second beam coherent light). The two beams of coherent light travel in the Sagnac loop 211 in opposite directions, return to the first beam splitting unit 212 simultaneously, and interfere with each other at the first beam splitting unit 212. Thereby, two beams of interference light (a first beam out1 of interference light and a second beam out2 of interference light) are outputted, and serve as an output signal of the intensity modulator 2. The first phase modulator 22 arranged in the Sagnac loop 211 is configured to modulate a phase of an optical signal in the Sagnac loop, thereby introducing a phase difference between the two beams of coherent light. A corresponding interference light signal is outputted by the first beam splitting unit 212. Intensities of the first beam of interference light and the second beam of interference light are related to the phase difference between the two beams of coherent light. Therefore, an intensity of the interference light signal outputted by the intensity modulator 2 can be modulated by changing the phase difference, so as to implement light intensity modulation.

It is assumed that an intensity of the light inputted to the intensity modulator 2 is $I_0$, the first beam splitting unit 212 is a beam splitter having a splitting ratio of 1:1, and the phase difference between the two beams of coherent light, which is modulated by the first phase modulator 22, is $\Delta\Phi$. In such case, the intensities of the two beams of interference light outputted by the intensity modulator 2 may be represented by the following equations.

$$I_{out1} = I_0 cos^2 \left(\frac{\Delta\emptyset}{2}\right)$$

$$I_{out2} = I_0 sin^2 \left(\frac{\Delta\emptyset}{2}\right)$$

In addition, a relationship between phases of the two beams of interference light depends on the phase difference $\Delta\Phi$.

Reference is further made to Figure 2. Two outputs from the intensity modulator 2 are coupled into the beam combining unit 4 via a first optical path and a second optical path, respectively, so that the two beams of interference light are capable to reach the beam combining unit 4 and combine into one beam for output. Such beam is coded light outputted from the apparatus for time-bin phase encoding. The first optical path and the second optical path are of different optical lengths for the interference light. In a preferable embodiment, the first optical path and the second optical path may be implemented in optical fibers.

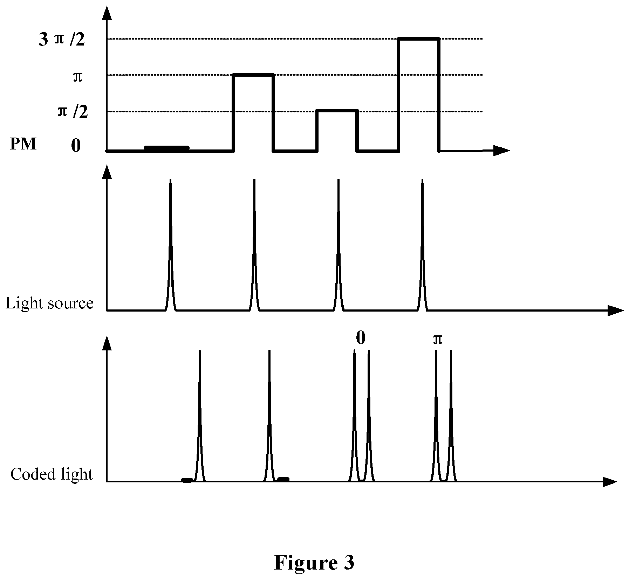

A phase difference $\Delta\Phi$ of 0, $\pi/2$, $\pi$, or $3\pi/2$ between the two beams of coherent light may be generated through phase modulation, so as to implement time-bin phase encoding in the apparatus for time-bin phase encoding according to an embodiment of the present disclosure. Figure 3 is a schematic diagram a relationship between an encoded optical signal and a modulated phase difference $\Delta\Phi$.

Reference is made to Figure 3. In a case that the phase difference $\Delta\Phi$ is equal to 0, the apparatus for time-bin phase encoding outputs a single pulse signal in a time period. In a case that the phase difference $\Delta\Phi$ is equal to $\pi$, the apparatus for time-bin phase encoding outputs a single pulse signal in the time period, and a temporal position of such single pulse signal occurs is different from that of the single pulse signal in case of $\Delta\Phi = 0$. Therefore, in the apparatus, single optical pulse signals at different temporal positions can be obtained by modulating the phase difference $\Delta\Phi$ to be 0 or $\pi$, which corresponds to time-bin encoding.

In a case that the phase difference $\Delta\Phi$ is equal to $\pi/2$, the apparatus for time-bin phase encoding outputs two consecutive pulse signals in the time period, and a phase difference between the two consecutive pulse signals is equal to 0. In a case that the phase difference $\Delta\Phi$ is equal to $3\pi/2$, the apparatus for time-bin phase encoding outputs two consecutive pulse signals in the time period, and a phase difference between the two consecutive pulse signals is equal to $\pi$. Therefore, in the apparatus, pairs of optical pulse signals with different phase differences can be obtained by modulating the phase difference $\Delta\Phi$ to be 0 or $\pi$, which corresponds to phase encoding.

In the present invention, the first optical transmission unit 3 is configured to transmit light outputted from the signal light source 1 to the intensity modulator 2, and transmit the interference light (that is, the first beam of interference light, Out1, as shown in Figure 2) outputted from the intensity modulator 2 to the beam combining unit 4. That is, the first optical transmission unit 3 is arranged in the first optical path, so as to transmit one of the two beams of interference light outputted from the intensity modulator 2 to the beam combining unit 4.

In an embodiment, the first optical transmission unit 3 may be a circulator (as shown in Figure 2) or a beam splitting unit.

In the present invention, the beam combining unit 4 is configured to receive the two beams of interference light outputted from the intensity modulator 2 and combine the two beams of interference light into one beam for output.

In an embodiment, the beam combining unit 4 may include a beam splitter BS (as shown in Figure 2) or a polarization beam splitter PBS.

As described above, the apparatus for time-bin phase encoding according to embodiments of the present disclosure includes the intensity modulator 2, which is based on the Sagnac interferometer, to implement time-bin phase encoding. The intensity modulator 2 is capable to eliminate an influence from an external environment, such as a length difference between arms, well due to self-stability. Therefore, good stability and improved encoding efficiency can be achieved without a complicated control structure. Furthermore, the apparatus with such structure is highly extendable, which can be applied to not only 4-state time-bin phase encoding based on the BB84 protocol, but also a 3-state protocol, a 6-state protocol, an MDIQKD protocol, or the like.

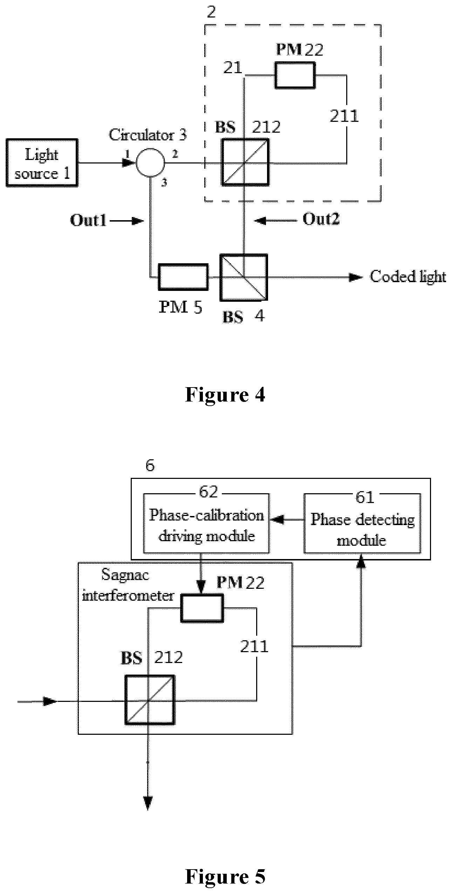

Figure 4 is a schematic structural diagram of an apparatus for time-bin phase encoding applied to a 6-state quantum key distribution protocol according to an embodiment of the present disclosure. In Figure 4, a second phase modulator 5 is arranged in the first optical path and/or in the second optical path, on a basis of the structure as shown in Figure 2. The second phase modulator 5 may be configured to modulate a phase difference between the two adjacent optical pulses to be $\pi/2$ or $3\pi/2$, thereby achieving a 6-state time-bin phase encoding.

According to an embodiment of the present disclosure, the apparatus for time-bin phase encoding may further include a phase-modulation calibrating apparatus 6, in order to address a drift in phase modulation under different environments. Thereby, encoding accuracy is further improved for the apparatus for time-bin phase encoding.

Figure 5 is a schematic structural diagram of a phase-modulation calibrating apparatus according to an embodiment of the present disclosure. As shown in Figure 5, the phase-modulation calibrating apparatus 6 includes a phase detecting module 61 and a phase-calibration driving module 62. The phase detecting module 61 is configured to detect a deviation in phase modulation of the first phase modulator 22. The phase-calibration driving module is configured to drive calibration on an amount of phase modulation (for example, calibration on a phase-modulation voltage, or calibration on a relative temporal position of applying a modulation voltage with respect to to-be-modulated light) applied by the first phase modulator 22. Hence, the first phase modulator can modulate a phase accurately under different ambient temperatures.

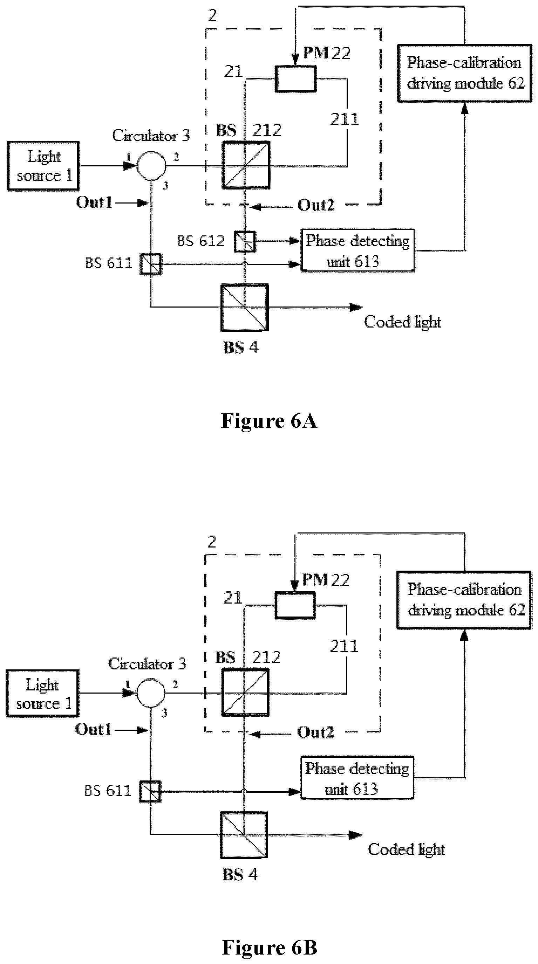

Figures 6A and 6B show schematic structural diagrams of a phase-modulation calibrating apparatus according to embodiments of the present disclosure. Figures 6A and 6B are intended to illustrate a method of calibrating phase-modulation in a time-sharing manner based on the signal light.

In Figures 6A and 6B, the phase detecting module 61 may include a phase detecting unit 613, and include one (Figure 6B, which shows a second optical transmission unit 611) or both (Figure 6A) of a second optical transmission unit 611 and a third optical transmission unit 612.

The second optical transmission unit 611 may be configured to transmit a part of the first beam of interference light to the phase detecting unit 613. The third optical transmission unit 612 is configured to transmit a part of the second beam of interference light to the phase detecting unit 613.

The phase detecting unit 613 is configured to receive the part of one, or the parts of both, of the two beams of interference light. Accordingly, the phase detecting unit 613 detects a difference between a target modulated phase and a measured modulated phase applied by the first phase modulator 22.

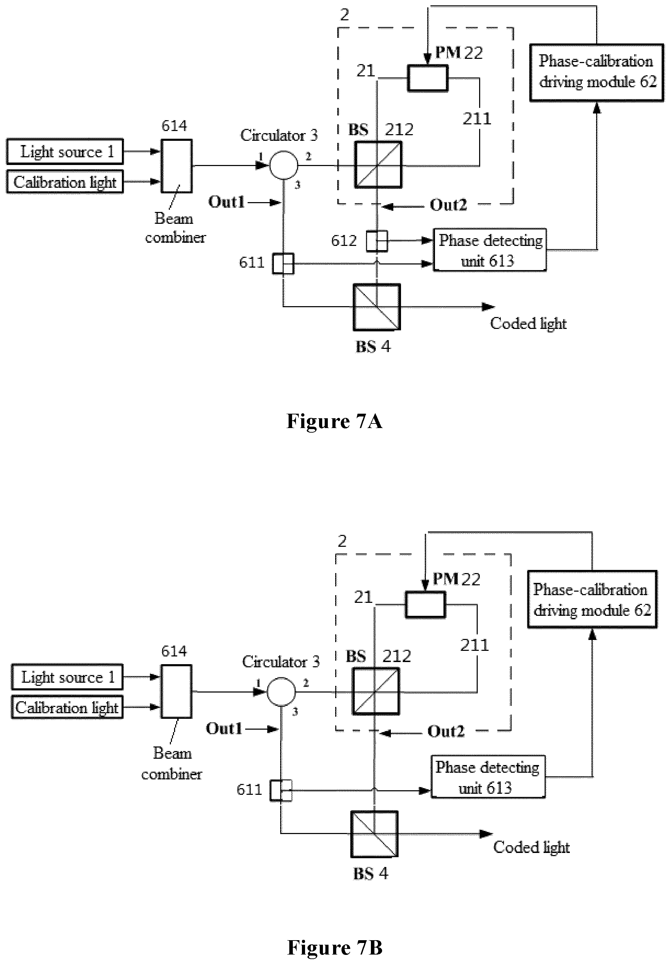

The phase-calibration driving module 62 is configured to drive calibration on the amount of the phase modulation applied by the first phase modulator, based on a detection result obtained by the phase detecting unit 613. Those skilled in the art may appreciate that in the structures shown in Figures 6A and 6B, light from the signal light source serves as both the signal light for time-bin phase encoding and calibration light for phase calibration, based on a principle of time division multiplexing. Hence, the phase modulation is calibrated with a simple structure. In such structure, the encoding and the calibration cannot be performed simultaneously, which reduces a temporal utilization rate of the apparatus for time-bin phase encoding. Figures 7A and 7B show schematic diagrams of a phase-modulation calibrating apparatus according to other embodiments of the present disclosure. Figures 7A and 7B are intended to illustrate a method of calibrating phase-modulation based on a principle of wavelength division multiplexing.

As shown in Figure 7A, the phase detecting module 61 may include a calibration light source, a second beam combining unit 614, the phase detecting unit 613, the second optical transmission unit 611, and the third optical transmission unit 612.

As shown in Figure 7B, the phase detecting module 61 may include a calibration light source, a second beam combining unit 614, the phase detecting unit 613, and the second optical transmission unit 611.

The calibration light source may operate under a wavelength different from that of the signal light source. The calibration light source may be a laser, such as a laser diode.

The second beam combining unit 614 is configured to combine calibration light from the calibration light source and the signal light from the signal light source into one beam for output. In a preferable embodiment, the second beam combining unit 614 may be a wavelength division multiplexer. Alternatively, the second beam combining unit 614 may be a beam splitter BS.

Correspondingly, the second optical transmission unit 611 may be configured to transmit at least a part of the first beam of interference light, which is related to the calibration light, to the phase detecting unit 613, and transmit the first beam of interference light, which is related to the signal light, to the beam combining unit 4.

The third optical transmission unit 612 may be configured to transmit at least a part of the second beam of interference light, which is related to the calibration light, to the phase detecting unit 613, and transmit the second beam of interference light, which is related to the signal light, to the beam combining unit 4. The phase detecting unit 613 is configured to receive the part of one, or the parts of both, of the two beams of interference light. Accordingly, the phase detecting unit 613 detects a difference between a target modulated phase and a measured modulated phase applied by the first phase modulator 22.

The phase-calibration driving module 62 is configured to drive calibration on the modulated phase applied by the first phase modulator, based on a detection result obtained by the phase detecting unit 613.

In addition, the interference light transmitted by the second optical transmission unit 611 or the third optical transmission unit 612 to the beam combining unit 4 may include a component of the calibration light. In such case, the apparatus for time-bin phase encoding further includes a filter unit for the calibration light in a preferable embodiment, such that the outputted coded light does not include the component of the calibration light.

The method of calibrating phase modulation based on the principle of wavelength division multiplexing is shown in Figures 7A and 7B. Since an independent calibration light source is provided, the encoding based on the signal light and the phase calibration based on the calibration light can be performed simultaneously. The calibration is in real time, thereby improving encoding efficiency of the apparatus.

Reference is further made to Figures 6A, 6B, 7A, and 7B. It is taken as an example that the first optical transmission unit 3 is a circulator in the apparatus for time-bin phase encoding. In such case, the second optical transmission unit 611 may be arranged in the first optical path. Alternatively, the second optical transmission unit 611 is arranged in the first optical path, while the third optical transmission unit 612 is arranged in the second optical path.

In such case, the second optical transmission unit and the third optical transmission unit may be wavelength division units or beam splitters.

In a case that the second optical transmission unit and the third optical transmission unit are wavelength division units, the second optical transmission unit and the third optical transmission unit may transmit the first beam of interference light and the second beam of interference light, which are related to the calibration light, to the phase detecting unit 613, and transmit the first beam of interference light and the second beam of interference light, which are related to the signal light, to the beam combining unit 4. Thereby, the coded light outputted by the apparatus for time-bin phase encoding does not include a component of the calibration light. In a case that the second optical transmission unit and the third optical transmission unit are beam splitters (BSs), the apparatus for time-bin phase encoding may further include a filter unit for the calibration light, such that that the coded light outputted from the apparatus does not include a component of the calibration light.

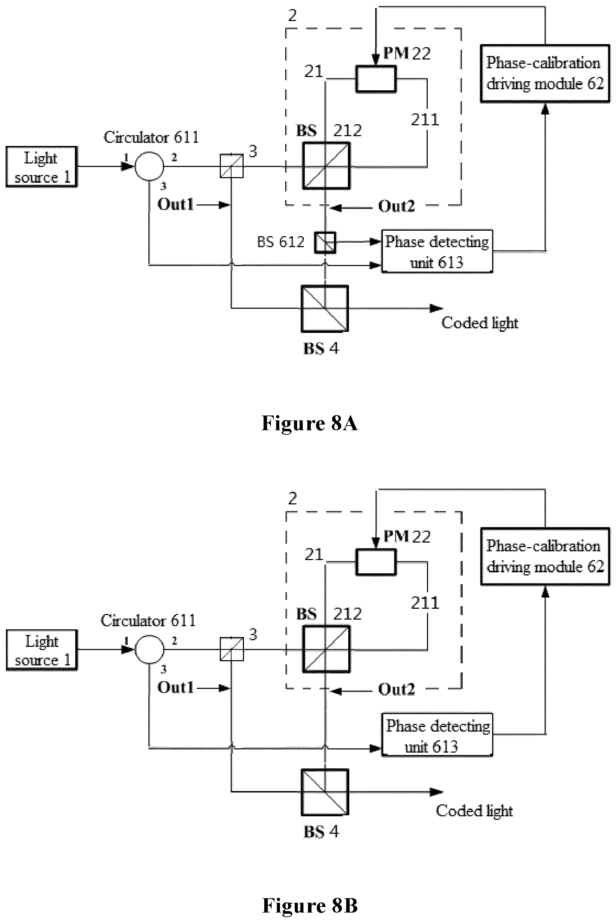

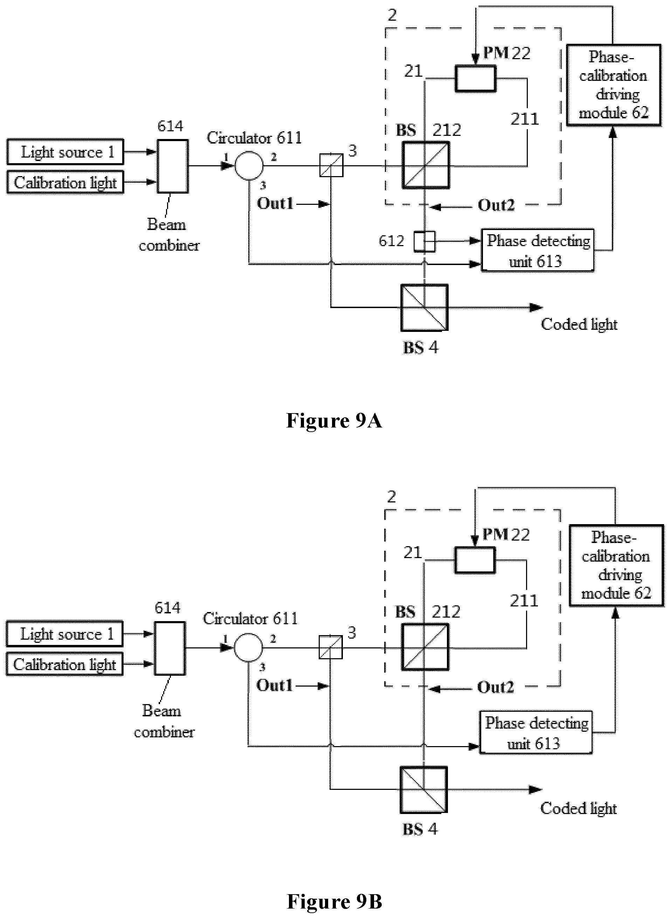

Figures 8A, 8B, 9A, and 9B are schematic structural diagrams of apparatuses for time-bin phase encoding, in which the first optical transmission unit 3 is a beam splitting unit (such as, a beam splitter BS). The structures shown in Figures 8A, 8B, 9A, and 9B are similar to those shown in Figures 6A, 6B, 7A, and 7B, and hereinafter the same content are not repeated herein.

Reference is made to Figures 8A, 8B, 9A, and 9B. In a case that the first optical transmission unit 3 is a beam splitting unit, the second optical transmission unit may be arranged out of the first optical path and the second optical path, and the third optical transmission unit (if required) may be arranged in one of the first optical path and the second optical path which is not provided with the first optical transmission unit 3, that is, arranged in the second optical path. In a preferable embodiment, the second optical transmission unit is a circulator. The apparatus for time-bin phase encoding may further include a filter unit for the calibration light, such that the coded light outputted from the apparatus does not include a component of the calibration light.

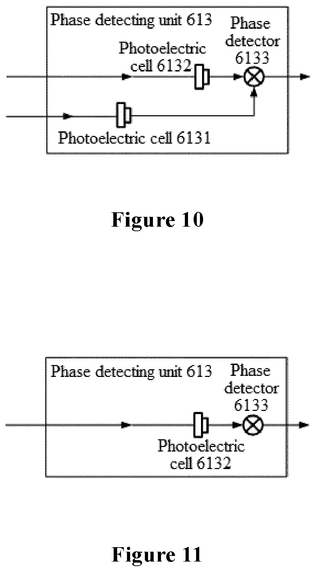

It is appreciated that the first optical path, the second optical path, the beam combining unit 4, and optical elements (such as the first optical transmission unit, the second optical transmission unit, and the third optical transmission unit) arranged in the first optical path and in the second optical path constitute an interferometer with unequal arms. It should be noted that the interferometer with unequal-arms becomes less stable when there are more optical elements included in the interferometer. Therefore, the solutions shown in Figures 8A to 9B are more stable than those shown in Figures 6A to 7B, because the first optical transmission unit is the beam splitting unit and thereby fewer optical elements are included in the interferometer (for example, the second optical transmission unit is not included). Figure 10 is a schematic structural diagram of a phase detecting unit 613 according to an embodiment of the present disclosure. As shown in Figure 10, the phase detecting unit 613 may include a first photoelectric cell 6131, a second photoelectric cell 6132, and a phase detector 6133. The first photoelectric cell is configured to receive at least a part of the first beam of interference light transmitted via the second optical transmission unit, and output a photocurrent (or a count) related to light intensity. The second photoelectric cell is configured to receive at least a part of the second beam of interference light transmitted via the third optical transmission unit, and output a photocurrent (or a count) related to light intensity. The phase detector is configured to receive the photocurrents outputted from the first photoelectric cell and the second photoelectric cell, perform a division operation on the photocurrents, and send a result to the phase-calibration driving module.

The phase-calibration driving module is configured to obtain an amount of phase calibration on the phase modulator 22 based on a feedback algorithm, and drive a calibration process on the phase modulator.

Hereinafter described is a phase calibration process performed by the phase-modulation calibrating apparatus as shown in Figure 10.

1) Modulation voltages for the phase differences of 0 and $\pi$ are applied. A maximum output (or count) Cnt1_max and a minimum output (or count) Cnt1_min of the first photoelectric cell are recorded. A maximum output (or count) Cnt2_max and a minimum output (or count) Cnt2_min of the second photoelectric cell are recorded. For example, under a modulation voltage for the phase difference of 0 (that is, no voltage is supplied to the phase modulator), the first photoelectric cell may generate the maximum output (or count) Cnt1_max, and the second photoelectric cell may generate the minimum output (or count) Cnt2_min. Under a modulation voltage for the phase difference of $\pi$, the first photoelectric cell may generate the minimum output (or count) Cnt1_min, and the second photoelectric cell may generate the maximum output (or count) Cnt2_max.

2) Modulation voltages for phase differences of $\pi$, $\pi/2$, and $3\pi/2$ are subject to a feedback process, on a basis of the recorded maximum outputs (or counts) and the recorded minimum outputs (or counts) of the photoelectric cells.

In a case that the modulation voltage for a phase difference of $\pi$ is fed back, an output (or count) generated by the first photoelectric cell, which corresponds to an interference light signal with zero intensity, is compared with the minimum output (or count) Cnt1_min of the first photoelectric cell, and the modulation voltage is adjusted until such output (or count) reaches the minimum output (or count) Cnt1_min. Alternatively, in such case, an output (or count) generated by the second photoelectric cell, which corresponds to an interference light signal with maximum intensity, is compared with the maximum output (or count) Cnt2_max of the second photoelectric cell, and the modulation voltage is adjusted until such output (or count) reaches the maximum output (or count) Cnt2_max.

In a case that the modulation voltage for a phase difference of $\pi/2$ is fed back, an output (or count) generated by the first photoelectric cell is divided by an output (or count) generated by the second photoelectric cell to obtain a ratio of the outputs. The ratio is compared with (Cnt1_max - Cnt1_min)/(Cnt2_max - Cnt2_min), and the modulation voltage is adjusted until the ratio of the outputs reaches (Cnt1_max - Cnt1_min)/(Cnt2_max - Cnt2_min).

A case of feeding back the modulation voltage for a phase difference of $3\pi/2$ is same as that for the phase difference of $\pi/2$.

It is appreciated that sensitivity of the photoelectric cells allows a certain degree of deviation. In practice, a deviation such as 0.2dB is allowed in comparison during the feedback process.

Figure 11 is a schematic structural diagram of a phase detecting unit 613 according to another embodiment of the present disclosure. As shown in Figure 11, the phase detecting unit 613 may include a phase detector 6133, and further include one of a first photoelectric cell and a second photoelectric cell, for example, the photoelectric cell 6132. The photoelectric cell 6132 is configured to receive at least a part of one of the two beams of interference light, which is transmitted via a corresponding one of the second optical transmission unit or the third optical transmission unit, and output a photocurrent (or a count) related to light intensity. The phase detector 6133 is configured to receive the photocurrent outputted from the photoelectric cell, record and store magnitude of the photocurrent, and send the magnitude to the phase-calibration driving module.

The phase-calibration driving module is configured to obtain an amount of phase calibration on the phase modulator 22 based on a feedback algorithm, and drive a calibration process on the phase modulator.

Hereinafter described is a phase calibration process performed by the phase-modulation calibrating apparatus as shown in Figure 11.

1) A modulation voltage for a phase difference of 0 is applied (that is, no voltage is applied to the phase modulator). The photoelectric cell may generate one of a maximum output (or count) Cnt_max and a minimum output (or count) Cnt_min, which is recorded as a calibration output (or count) corresponding to the phase difference of 0. A modulation voltage for a phase difference of $\pi$ is applied. The photoelectric cell may generate the other of the maximum output (or count) Cnt_max and the minimum output (or count) Cnt_min, which is recorded as a calibration output (or count) corresponding to the phase difference of $\pi$. For example, under the modulation voltage for the phase difference of 0, the photoelectric cell may generate the maximum output (or count) Cnt_max. Under the modulation voltage for the phase difference of $\pi$, the photoelectric cell may generate the minimum output (or count) Cnt_min.

2) Modulation voltages for phase differences of $\pi$, $\pi/2$, and $3\pi/2$ are subject to a feedback process, on a basis of the calibration output (or count) corresponding to the phase difference of 0 and the calibration output (or count) corresponding to the phase difference of $\pi$.

In a case that the modulation voltage for a phase difference of $\pi$ is fed back, an output (or count) generated by the photoelectric cell is compared with the calibration output (or count) corresponding to the phase difference of $\pi$, and the modulation voltage is adjusted until such output (or count) reaches the calibration output (or count) corresponding to the phase difference of $\pi$.

In a case that the modulation voltage for a phase difference of $\pi/2$ is fed back, an output (or count) generated by the photoelectric cell is compared with a half of an absolute value of a difference between the calibration output (or count) corresponding to the phase difference of 0 and the calibration output (or count) corresponding to the phase difference of $\pi$, and the modulation voltage is adjusted until such output (or count) reaches the half of the absolute value. A case of feeding back the modulation voltage for a phase difference of $3\pi/2$ is same as that for the phase difference of $\pi/2$.

It is appreciated that sensitivity of the photoelectric cells allows a certain degree of deviation. In practice, a deviation such as 0.2dB is allowed in comparison during the feedback process.

The apparatus for time-bin phase encoding is provided according to embodiments of the present disclosure, where an intensity modulator based on a Sagnac interferometer is included. Thereby, time-bin phase encoding is implemented through intensity modulation, while good stability can be achieved with respect to an environment. A structure for encoding is simplified, efficiency of the encoding is improved, and an apparatus for decoding is also simplified. In addition, a structure for calibrating phase modulation is provided according to embodiments of the present disclosure, which further improves stability of phase modulation and encoding performance.

A system for quantum key distribution is further provided according to an embodiment of the present disclosure, including the aforementioned apparatus for time-bin phase encoding.

A method for time-bin phase encoding based on the aforementioned apparatus for time-bin phase encoding, and a method for quantum key distribution based on the aforementioned system for quantum key distribution, are further provided according to some aspects of the present disclosure that are not part of the claimed invention.

**Claims**

1. An apparatus for time-bin phase encoding in quantum key distribution, comprising:

   a signal light source (1), configured to provide signal light;
   an intensity modulator (2), comprising a Sagnac interferometer (21) and a first phase modulator (22);
   a first optical transmission unit (3); and
   a beam combining unit (4);
   wherein the Sagnac interferometer (21) comprises a Sagnac loop (211) and a first beam splitting unit (212), and the first beam splitting unit (212) and the first phase modulator (22) are arranged in the Sagnac loop (211);
   wherein the intensity modulator (2) is configured to receive the signal light, split the signal light into two beams of coherent light travelling in the Sagnac loop (211) in opposite directions, and generate and output a first beam of interference light and a second beam of interference light; wherein the first beam of interference light is transmitted to the beam combining unit (4) via a first optical path, and the second beam of interference light is transmitted to the beam combining unit (4) via a second optical path; wherein the first optical path and the second optical path are of different optical lengths for the first beam of interference light and the second beam of interference light, respectively; wherein the first optical transmission unit (3) is configured to: transmit the signal light to the intensity modulator (2), and transmit the first beam of interference light outputted from the intensity modulator (2) to the beam combining unit (4) via the first optical path; and wherein the beam combining unit (4) is configured to receive the first beam of interference light and the second beam of interference light, combine the first beam of interference light and the second beam of interference light into one beam, and output the one beam.

2. The apparatus according to claim 1, wherein a splitting ratio of the first beam splitting unit (212) is 1:1.

3. The apparatus according to claim 1, wherein a phase difference introduced between the two beams of coherent light by the first phase modulator (22) is 0, $\pi/2$, $\pi$, or $3\pi/2$, in a time period.

4. The apparatus according to any one of claims 1 to 3, further comprising:
a phase-modulation calibrating apparatus (6), comprising a phase detecting module (61) and a phase-calibration driving module (62), wherein:

the phase detecting module (61) is configured to detect a difference between a target amount and a measured amount of phase modulation applied by the first phase modulator (22), and the phase-calibration driving module (62) is configured to drive calibration on an amount of phase modulation applied by the first phase modulator (22).

5. The apparatus according to claim 4, wherein:

the phase detecting module (61) comprises a phase detecting unit (613) and a second optical transmission unit (611), and the second optical transmission unit (611) is configured to transmit a part of the first beam of interference light to the phase detecting unit (613).

6. The apparatus according to claim 4, wherein:

the phase detecting module (61) comprises a phase detecting unit (613), a second optical transmission unit (611), and a third optical transmission unit (612); the second optical transmission unit (611) is configured to transmit a part of the first beam of interference light to the phase detecting unit (613); and the third optical transmission unit (611) is configured to transmit a part of the second beam of interference light to the phase detecting unit (613).

7. The apparatus according to claim 5 or 6, wherein:

the first optical transmission unit (3) is a circulator, and the second optical transmission unit (611) is a beam splitting unit, and is arranged in the first optical path.

8. The apparatus according to claim 5 or 6, wherein:

the first optical transmission unit (3) is a beam splitting unit, and the second optical transmission unit (611) is a circulator, and is arranged out of the first optical path.

9. The apparatus according to claim 6, wherein:

the phase detecting unit (613) comprises a first photoelectric cell (6131), a second photoelectric cell (6132), and a phase detector (6133); and the phase-modulation calibrating apparatus (6) is configured to:

drive the first phase modulator (22) to perform phase modulation; record a maximum output Cnt1_max and a minimum output Cnt1_min of the first photoelectric cell (6131); record a maximum output Cnt2_max and a minimum output Cnt2_min of the second photoelectric cell (6132), and perform a feedback process comprising one of:

driving the first phase modulator (22) until an output from the first photoelectric cell (6131) is equal to Cnt1_max and/or an output from the second photoelectric cell (6132) is equal to Cnt2_min; driving the first phase modulator (22) until an output from the first photoelectric cell (6131) is equal to Cnt1_min and/or an output from the second photoelectric cell (6132) is equal to Cnt2_max; or

driving the first phase modulator (22) until a ratio of an output from the first photoelectric cell (6131) to an output from the second photoelectric cell (6132) is equal to (Cnt1_max - Cnt1_min)/(Cnt2_max - Cnt2_min).

10. The apparatus according to claim 5, wherein:

the phase detecting unit (613) comprises a first photoelectric cell (6131) and a phase detector (6133); and
the phase-modulation calibrating apparatus (6) is configured to:

drive the first phase modulator (22) to perform phase modulation;
record a maximum output Cnt_max and a minimum output Cnt_min of the first photoelectric cell (6131), and
perform a feedback process comprising one of:

driving the first phase modulator (22) until an output from the first photoelectric cell (6131) is equal to Cnt_max;
driving the first phase modulator (22) until an output from the first photoelectric cell (6131) is equal to Cnt_min; or
driving the first phase modulator (22) until an output from the first photoelectric cell (6131) is equal to (Cnt_max-Cnt_min)/2.

11. The apparatus according to any one of claims 4 to 10, wherein:

the phase detecting module (61) further comprises a calibration light source and a second beam combining unit (614);
the calibration light source is configured to provide calibration light; and
the second beam combining unit (614) is configured to combine the calibration light and the signal light into one beam for output.

12. The apparatus according to any one of claims 1 to 11, further comprising:
a second phase modulator (5), arranged in one or both of the first optical path and the second optical path, wherein the second phase modulator (5) is configured to introduce a modulation phase of 0 or $\pi/2$.

13. A system for quantum key distribution, comprising:
the apparatus for time-bin phase encoding according to any one of claims 1 to 12.

**Patentansprüche**

1. Vorrichtung zur Zeit-Bin-Phasencodierung bei der Quantenschlüsselverteilung, umfassend:

eine Signallichtquelle (1), die dazu ausgebildet ist, Signallicht zu liefern;
einen Intensitätsmodulator (2), der ein Sagnac-Interferometer (21) und einen ersten Phasenmodulator (22) umfasst;
eine erste optische Übertragungseinheit (3); und
eine Strahlkombinationseinheit (4);

wobei das Sagnac-Interferometer (21) eine Sagnac-Schleife (211) und eine erste Strahlteilereinheit (212) umfasst, und wobei die erste Strahlteilereinheit (212) und der erste Phasenmodulator (22) in der Sagnac-Schleife (211) angeordnet sind;
wobei der Intensitätsmodulator (2) dazu ausgebildet ist, das Signallicht zu empfangen, das Signallicht in zwei Strahlen kohärenten Lichts aufzuteilen, die sich in der Sagnac-Schleife (211) in entgegengesetzten Richtungen bewegen, und einen ersten Interferenzlichtstrahl und einen zweiten Interferenzlichtstrahl zu erzeugen und auszugeben;
wobei der erste Interferenzlichtstrahl über einen ersten optischen Pfad an die Strahlkombinationseinheit (4) übertragen wird und der zweite Interferenzlichtstrahl über einen zweiten optischen Pfad an die Strahlkombinationseinheit (4) übertragen wird;
wobei der erste optische Pfad und der zweite optische Pfad für den ersten Interferenzlichtstrahl beziehungsweise den zweiten Interferenzlichtstrahl unterschiedliche optische Längen aufweisen;
wobei die erste optische Übertragungseinheit (3) dazu ausgebildet ist, dass sie: das Signallicht an den Intensitätsmodulator (2) überträgt und den ersten Interferenzlichtstrahl, der von dem Intensitätsmodulator (2) ausgegeben wird, über den ersten optischen Pfad an die Strahlkombinationseinheit (4) überträgt; und
wobei die Strahlkombinationseinheit (4) dazu ausgebildet ist, den ersten Interferenzlichtstrahl und den zweiten Interferenzlichtstrahl zu empfangen, den ersten Interferenzlichtstrahl und den zweiten Interferenzlichtstrahl zu einem Strahl zu kombiniert und den einen Strahl auszugeben.

2. Vorrichtung nach Anspruch 1, wobei das Teilungsverhältnis der ersten Strahlteilereinheit (212) 1:1 beträgt.

**3.** Vorrichtung nach Anspruch 1, wobei eine Phasendifferenz, die zwischen den beiden Strahlen kohärenten Lichts durch den ersten Phasenmodulator (22) eingeführt wird, 0, $\pi/2$, $\pi$ oder $3\pi/2$ in einer Zeitperiode beträgt.

**4.** Vorrichtung nach einem der Ansprüche 1 bis 3, weiter umfassend:
eine Phasenmodulationskalibrierungsvorrichtung (6), die ein Phasendetektionsmodul (61) und ein Phasenkalibrierungs-Ansteuermodul (62) umfasst, wobei:

das Phasendetektionsmodul (61) derart ausgebildet ist, dass es eine Differenz zwischen einem Zielbetrag und einem gemessenen Betrag der Phasenmodulation, die durch den ersten Phasenmodulator (22) angelegt wird, detektiert, und
das Phasenkalibrierungs-Ansteuermodul (62) derart ausgebildet ist, dass es die Kalibrierung in Abhängigkeit von einer vom ersten Phasenmodulator (22) angelegten Phasenmodulation steuert.

**5.** Vorrichtung nach Anspruch 4, wobei:

das Phasendetektionsmodul (61) eine Phasendetektionseinheit (613) und eine zweite optische Übertragungseinheit (611) umfasst, und
die zweite optische Übertragungseinheit (611) derart ausgebildet ist, dass sie einen Teil des ersten Interferenzlichtstrahls an die Phasendetektionseinheit (613) überträgt.

**6.** Vorrichtung nach Anspruch 4, wobei:

das Phasendetektionsmodul (61) eine Phasendetektionseinheit (613), eine zweite optische Übertragungseinheit (611) und eine dritte optische Übertragungseinheit (612) umfasst;
die zweite optische Übertragungseinheit (611) derart ausgebildet ist, dass sie einen Teil des ersten Interferenzlichtstrahls an die Phasendetektionseinheit (613) überträgt; und
die dritte optische Übertragungseinheit (611) derart ausgebildet ist, dass sie einen Teil des zweiten Interferenzlichtstrahls an die Phasendetektionseinheit (613) überträgt.

**7.** Vorrichtung nach Anspruch 5 oder 6, wobei:

die erste optische Übertragungseinheit (3) ein Zirkulator ist, und
die zweite optische Übertragungseinheit (611) eine Strahlenteilereinheit ist und im ersten optischen Pfad angeordnet ist.

**8.** Vorrichtung nach Anspruch 5 oder 6, wobei:

die erste optische Übertragungseinheit (3) eine Strahlenteilereinheit ist, und
die zweite optische Übertragungseinheit (611) ein Zirkulator ist und ausserhalb des ersten optischen Pfades angeordnet ist.

**9.** Vorrichtung nach Anspruch 6, wobei:

die Phasendetektionseinheit (613) eine erste photoelektrische Zelle (6131), eine zweite photoelektrische Zelle (6132) und einen Phasendetektor (6133) umfasst; und
die Phasenmodulationskalibrierungsvorrichtung (6) derart ausgebildet ist, dass sie:

den ersten Phasenmodulator (22) ansteuert, um eine Phasenmodulation durchzuführen;
ein maximales Ausgangssignal Cnt1_max und ein minimales Ausgangssignal Cnt1_min der ersten photoelektrischen Zelle (6131) aufzeichnet;
ein maximales Ausgangssignal Cnt2_max und ein minimales Ausgangssignal Cnt2_min der zweiten photoelektrischen Zelle (6132) aufzeichnet, und
einen Rückkopplungsprozess durchführt, der eines gemäss Folgendem umfasst:

Ansteuern des ersten Phasenmodulators (22), bis ein Ausgangssignal der ersten photoelektrischen Zelle (6131) gleich Cnt1_max und/oder ein Ausgangssignal der zweiten photoelektrischen Zelle (6132) gleich Cnt2_min ist;
Ansteuern des ersten Phasenmodulators (22), bis ein Ausgangssignal der ersten photoelektrischen Zelle (6131) gleich Cnt1_min ist und/oder ein Ausgangssignal der zweiten photoelektrischen Zelle (6132) gleich Cnt2_max ist; oder
Ansteuern des ersten Phasenmodulators (22), bis ein Verhältnis eines Ausgangssignals der ersten photoelektrischen Zelle (6131) zu einem Ausgangssignal der zweiten photoelektrischen Zelle (6132) gleich (Cnt1_max - Cnt1_min)/(Cnt2_max - Cnt2_min) ist.

**10.** Vorrichtung nach Anspruch 5, wobei:

die Phasendetektionseinheit (613) eine erste photoelektrische Zelle (6131) und einen Phasendetektor (6133) umfasst; und
die Phasenmodulationskalibrierungsvorrichtung (6) derart ausgebildet ist, dass sie:

den ersten Phasenmodulator (22) ansteuert, um eine Phasenmodulation durchzuführen;

ein maximalen Ausgangssignal Cnt_max und ein minimales Ausgangssignal Cnt_min der ersten photoelektrischen Zelle (6131) aufzeichnet, und

einen Rückkopplungsprozess durchführt, der eines gemäss Folgendem umfasst:

Ansteuern des ersten Phasenmodulators (22), bis ein Ausgangssignal der ersten photoelektrischen Zelle (6131) gleich Cnt_max ist;

Ansteuern des ersten Phasenmodulators (22), bis ein Ausgangssignal der ersten photoelektrischen Zelle (6131) gleich Cnt_min ist; oder

Ansteuern des ersten Phasenmodulators (22), bis ein Ausgangssignal der ersten photoelektrischen Zelle (6131) gleich (Cnt_max-Cnt_min)/2 ist.

11. Vorrichtung nach einem der Ansprüche 4 bis 10, wobei:

das Phasendetektionsmodul (61) weiter eine Kalibrierungslichtquelle und eine zweite Strahlkombinationseinheit (614) umfasst;

wobei die Kalibrierungslichtquelle derart ausgebildet ist, dass sie Kalibrierungslicht liefert; und

wobei die zweite Strahlkombinationseinheit (614) derart ausgebildet ist, dass sie das Kalibrierungslicht und das Signallicht zu einem einzigen Strahl für die Ausgabe kombiniert.

12. Vorrichtung nach einem der Ansprüche 1 bis 11, weiter umfassend:

einen zweiten Phasenmodulator (5), der in einem oder beiden von dem ersten optischen Pfad und dem zweiten optischen Pfad angeordnet ist, wobei der zweite Phasenmodulator (5) dazu ausgebildet ist, eine Modulationsphase von 0 oder n/2 einzuführen.

13. System zur Quantenschlüsselverteilung, umfassend:

die Vorrichtung zur Zeit-Bin-Phasencodierung nach einem der Ansprüche 1 bis 12.

## Revendications

1. Dispositif de codage de phase temps-bin dans la distribution de clés quantiques, comprenant :

une source de lumière de signal (1) adaptée pour fournir de la lumière de signal ;
un modulateur d'intensité (2) comprenant un interféromètre de Sagnac (21) et un premier modulateur de phase (22) ;

une première unité de transmission optique (3) ; et
une unité de combinaison de faisceaux (4) ;

l'interféromètre de Sagnac (21) comprenant une boucle de Sagnac (211) et une première unité de séparation de faisceaux (212), et dans lequel la première unité de séparation de faisceaux (212) et le premier modulateur de phase (22) sont disposés dans la boucle de Sagnac (211) ;

le modulateur d'intensité (2) étant adapté pour recevoir la lumière de signal, pour diviser la lumière de signal en deux faisceaux de lumière cohérente se déplaçant dans des directions opposées dans la boucle de Sagnac (211), et pour générer et délivrer un premier faisceau de lumière d'interférence et un second faisceau de lumière d'interférence ;

le premier faisceau lumineux d'interférence étant transmis à l'unité de combinaison de faisceaux (4) via un premier chemin optique et le second faisceau lumineux d'interférence étant transmis à l'unité de combinaison de faisceaux (4) via un second chemin optique ;

le premier chemin optique et le deuxième chemin optique étant des longueurs optiques différentes pour le premier faisceau lumineux d'interférence et le deuxième faisceau lumineux d'interférence, respectivement ;

la première unité de transmission optique (3) étant adaptée pour : transmettre la lumière de signal au modulateur d'intensité (2) et transmettre le premier faisceau lumineux d'interférence sortant du modulateur d'intensité (2) à l'unité de combinaison de faisceaux (4) via le premier chemin optique ; et

l'unité de combinaison de faisceaux (4) étant adaptée pour recevoir le premier faisceau de lumière d'interférence et le second faisceau de lumière d'interférence, pour combiner le premier faisceau de lumière d'interférence et le second faisceau de lumière d'interférence en un seul faisceau, et pour délivrer le seul faisceau.

2. Dispositif selon la revendication 1, dans lequel le rapport de division de la première unité de séparation de faisceau (212) est de 1:1.

3. Dispositif selon la revendication 1, dans lequel une différence de phase introduite entre les deux faisceaux de lumière cohérente par le premier modulateur de phase (22) est 0, π/2, π ou 3π/2 dans une période de temps.

**4.** Dispositif selon l'une quelconque des revendications 1 à 3, comprenant en outre :

un dispositif d'étalonnage de modulation de phase (6) comprenant un module de détection de phase (61) et un module de commande d'étalonnage de phase (62), dans lequel :

le module de détection de phase (61) est adapté pour détecter une différence entre une quantité cible et une quantité mesurée de la modulation de phase appliquée par le premier modulateur de phase (22), et
le module de commande d'étalonnage de phase (62) est conçu pour commander l'étalonnage d'une modulation de phase appliquée par le premier modulateur de phase (22).

**5.** Dispositif selon la revendication 4, dans lequel :

le module de détection de phase (61) comprend une unité de détection de phase (613) et une seconde unité de transmission optique (611), et
la deuxième unité de transmission optique (611) est conçue pour transmettre une partie du premier faisceau lumineux d'interférence à l'unité de détection de phase (613).

**6.** Dispositif selon la revendication 4, dans lequel :

le module de détection de phase (61) comprend une unité de détection de phase (613), une deuxième unité de transmission optique (611) et une troisième unité de transmission optique (612) ;
la seconde unité de transmission optique (611) est conçue pour transmettre une partie du premier faisceau lumineux d'interférence à l'unité de détection de phase (613) ; et
la troisième unité de transmission optique (611) est conçue pour transmettre une partie du deuxième faisceau lumineux d'interférence à l'unité de détection de phase (613).

**7.** Dispositif selon la revendication 5 ou 6, dans lequel :

la première unité de transmission optique (3) est un circulateur, et
la deuxième unité de transmission optique (611) est une unité de séparation de faisceaux et est disposée dans le premier chemin optique.

**8.** Dispositif selon la revendication 5 ou 6, dans lequel :

la première unité de transmission optique (3) est une unité de séparation de faisceau, et
la deuxième unité de transmission optique (611) est un circulateur et est disposée à l'extérieur du premier chemin optique.

**9.** Dispositif selon la revendication 6, dans lequel :

l'unité de détection de phase (613) comprend une première cellule photoélectrique (6131), une deuxième cellule photoélectrique (6132) et un détecteur de phase (6133) ; et
le dispositif d'étalonnage de modulation de phase (6) est conçu de manière à :

commander le premier modulateur de phase (22) pour effectuer une modulation de phase ;
enregistrer un signal de sortie maximal Cnt1_max et un signal de sortie minimal Cnt1_min de la première cellule photoélectrique (6131) ;
enregistrer un signal de sortie maximal Cnt2_max et un signal de sortie minimal Cnt2_min de la deuxième cellule photoélectrique (6132), et
effectuer un processus de rétroaction comprenant l'un des éléments suivants :

commander le premier modulateur de phase (22) jusqu'à ce qu'un signal de sortie de la première cellule photoélectrique (6131) soit égal à Cnt1_max et/ou qu'un signal de sortie de la deuxième cellule photoélectrique (6132) soit égal à Cnt2_min ;
commander le premier modulateur de phase (22) jusqu'à ce qu'un signal de sortie de la première cellule photoélectrique (6131) soit égal à Cnt1_min et/ou qu'un signal de sortie de la deuxième cellule photoélectrique (6132) soit égal à Cnt2_max ; ou
commander le premier modulateur de phase (22) jusqu'à ce qu'un rapport entre un signal de sortie de la première cellule photoélectrique (6131) et un signal de sortie de la seconde cellule photoélectrique (6132) soit égal à (Cnt1_max- Cnt1_min)/(Cnt2_max - Cnt2_min).

**10.** Dispositif selon la revendication 5, dans lequel :

l'unité de détection de phase (613) comprend une première cellule photoélectrique (6131) et un détecteur de phase (6133) ; et
le dispositif d'étalonnage de modulation de phase (6) est conçu de manière à :

commander le premier modulateur de phase (22) pour effectuer une modulation de phase ;

enregistrer un signal de sortie maximal Cnt_max et un signal de sortie minimal Cnt_min de la première cellule photoélectrique (6131), et

effectuer un processus de rétroaction comprenant l'un des éléments suivants :

commander le premier modulateur de phase (22) jusqu'à ce qu'un signal de sortie de la première cellule photoélectrique (6131) soit égal à Cnt_max ;

commander le premier modulateur de phase (22) jusqu'à ce qu'un signal de sortie de la première cellule photoélectrique (6131) soit égal à Cnt_min ; ou

commander le premier modulateur de phase (22) jusqu'à ce qu'un signal de sortie de la première cellule photoélectrique (6131) soit égal à (Cnt_max-Cnt_min)/2.

11. Dispositif selon l'une quelconque des revendications 4 à 10, dans lequel :

le module de détection de phase (61) comprend en outre une source de lumière d'étalonnage et une seconde unité de combinaison de faisceaux (614) ;

la source de lumière d'étalonnage étant adaptée pour fournir de la lumière d'étalonnage ; et

la seconde unité de combinaison de faisceaux (614) étant conçue pour combiner la lumière d'étalonnage et la lumière de signal en un seul faisceau pour la sortie.

12. Dispositif selon l'une quelconque des revendications 1 à 11, comprenant en outre :

un second modulateur de phase (5) disposé dans l'un ou les deux dudit premier chemin optique et dudit second chemin optique, le second modulateur de phase (5) étant adapté pour introduire une phase de modulation de 0 ou $\pi/2$.

13. Système de distribution de clés quantiques, comprenant

le dispositif de codage de phase temps-bin selon l'une quelconque des revendications 1 à 12.

**Figure 1**

**Figure 2**

**Figure 3**

EP 3 823 208 B1

Figure 4

Figure 5

**Figure 6A**

**Figure 6B**

**Figure 7A**

**Figure 7B**

**Figure 8A**

**Figure 8B**

**Figure 9A**

**Figure 9B**

Phase detecting unit 613    Phase
                            detector
                            6133

Photoelectric
cell 6132

Photoelectric cell 6131

**Figure 10**

Phase detecting unit 613    Phase
                            detector
                            6133

Photoelectric
cell 6132

**Figure 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810749227

- CN 206865468 U

**Non-patent literature cited in the description**

- **ZHOU CHUNYUAN.** Time-division single-photon Sagnac interferometer for quantum key distribution. *Applied Physics Letters,* 03 February 2003, vol. 82 (5), 832-834